Europäisches Patentamt

European Patent Office

Office européen des brevets

(19)

(11) Veröffentlichungsnummer: **0 256 563 B1**

(12) **EUROPÄISCHE PATENTSCHRIFT**

(45) Veröffentlichungstag der Patentschrift: 27.12.91

(51) Int. Cl.⁵: **E06B 3/66**

(21) Anmeldenummer: 87112091.1

(22) Anmeldetag: 20.08.87

(54) **Abstandhalterrahmen für Mehrscheibenisolierglas.**

(30) Priorität: 20.08.86 DE 3628275

(43) Veröffentlichungstag der Anmeldung:
24.02.88 Patentblatt 88/08

(45) Bekanntmachung des Hinweises auf die
Patenterteilung:
27.12.91 Patentblatt 91/52

(84) Benannte Vertragsstaaten:
**ES FR GB IT SE**

(56) Entgegenhaltungen:
EP-A- 0 051 208
DE-A- 2 816 005
DE-A- 3 334 859

(73) Patentinhaber: **Julius & August Erbslöh GmbH
& Co.
Siebeneickerstrasse 235
W-5620 Velbert 15 (Neviges)(DE)**

(72) Erfinder: **Grosch, Karl
Magdalenenstrasse 12
W-5600 Wuppertal(DE)**

(74) Vertreter: **Buse, Karl Georg, Dipl.-Phys. et al
Patentanwälte Dipl.-Phys. Buse Dipl.-Phys.
Mentzel Dipl.-Ing. Ludewig Unterdörnen 114
Postfach 20 02 10
W-5600 Wuppertal 2(DE)**

Rank Xerox (UK) Business Services

## Beschreibung

Die Erfindung betrifft einen Abstandhalterrahmen für Mehrscheibenisolierglas, dessen die Scheiben auf Abstand haltende Profilleisten einen Durchtrittsöffnungen zum Glaszwischenraum aufweisenden Hohlraum zur Aufnahme eines Trockenmittels aufweisen.

Bekannte Isolierglasscheiben weisen wenigstens zwei ebene, plattenförmige Glasscheiben auf, die an ihrem Rand über einen Abstandhalterrahmen miteinander verbunden sind. Dieser Abstandhalterrahmen besteht zumeist aus einem Hohlprofil aus metallischem Werkstoff, vorzugsweise aus Aluminium und dessen Legierungen, wobei diese Profilleisten zum Glaszwischenraum hinweisende und abstandsweise hintereinanderliegende Öffnungen aufweisen, um einen Feuchtigkeitsaustausch der Luft zwischen den Isolierglasscheiben und dem in das Hohlprofil eingefüllten Trockenmittel zu ermöglichen. Derartige Isolierglasscheiben sind jedoch in der Regel palttenförmige Gebilde, die eben sind, d.h., daß in einer Richtung gekrümmte Glasscheiben nicht als Isolierglasscheiben ausgebildet sind. Darüber hinaus sind Hohlprofile für Abstandshalter, insbesondere solche mit geringen Abmessungen, in der Regel nicht anodisierbar, da Elektrolytreste in den Hohlräumen nicht restlos zu entfernen sind und dann Ursache für Korrosion sein können.

Ein aus der EP 0051208 Al ersichtlicher Abstandhalterrahmen einer Mehrscheiben-Isolierglaseinheit besteht aus vier Profilrohren, die an ihren aneinanderstoßenden Eckbereichen durch einstükkige Winkelstücke kraftschlüssig miteinander verbunden sind, indem die Schenkel der Winkelstücke in Hohlräume der Profilrohre eingreifen. Wenigstens eines der Profilrohre ist mindestens teilweise mit einem Trockenmittel gefüllt, das über dem Scheibenzwischenraum zugekehrten Durchbrüchen einer Profilrohrwand mit dem Raum zwischen den Scheiben in Verbindung steht und deren Beschlagen verhindert. Damit offenbart auch diese vorbekannte Isolierglaseinheit nicht mehr als die eingangs beschriebenen Isolierglasscheiben, so daß auch diese vorbekannte Isolierglaseinheit mit den o.g. Nachteilen behaftet ist.

Die Aufgabe der vorliegenden Erfindung besteht darin, einen Abstandhalterrahmen der vorgenannten Art zu schaffen, mit dem es unter Beibehaltung der bisherigen Eigenschaften hinsichtlich der Luftrocknung im Glaszwischenraum möglich ist, räumlich gebogene Glasscheiben zu einer Isolierglasscheibe zu vereinigen.

Diese Aufgabe ist erfindungsgemäß dadurch gelöst, daß der Abstandhalterrahmen nur an seiner Unterseite eine das Trockenmittel aufnehmende Hohlprofilleiste aufweist, mit der ein die anderen Rahmenseiten bildendes Vollprofil verbunden ist.

Durch die Kombination eines den wesentlichen Teil des Abstandhalterrahmens bildenden Vollprofiles mit einem nur an der unteren Rahmenseite angeordneten Hohlprofil ist das Biegen eines Abstandhalterrahmens für gekrümmt verlaufende Scheiben unproblematisch, so daß sich rationale Fertigungsmethoden anwenden lassen, und außerdem kann das Vollprofil ohne Schwierigkeiten anodisiert werden, so daß die Oberfläche des Abstandhalterrahmens im Bereich des Vollprofiles in vollem Umfang geschützt werden kann. Die nur bereichsweise Anordnung eines Hohlprofiles ermöglicht eine für den verhältnismäßig kleinen Luftzwischenraum zwischen den Einzelscheiben ausreichende Applizierung des Trockenmittels. Derartige, gegegebenenfalls gekrümmt verlaufende Isolierglasscheiben lassen sich insbesondere auch im Automobilbau anwenden, da das Vollprofil jeder gewünschten Scheibenkrümmung angepaßt werden kann.

Dabei mag die Hohlprofilleiste vorteilhaft auf Zapfen des Vollprofiles aufsteckbar sein. Solche Steckverbindungen lassen sich außer durch Kleben auch auf einfache Weise durch Verstiften od. dgl. sichern.

Zur Schaffung eines absatzfreien Überganges am Abstandhalterrahmen zwischen dem Vollprofil und der Hohlprofilleiste ist es vorteilhaft, wenn der Querschnitt des Vollprofiles in seiner Umrißlinie mit der Außenkontur des Querschnitts der Hohlprofilleiste übereinstimmt.

Um eine der Scheibengröße angepaßte Menge an Trockenmittel in der Hohlprofilleiste in jedem Fall unterbringen zu können, läßt sich die Hohlprofilleiste nach einem weiteren Ausgestaltungsmerkmal der Erfindung derat ausbilden, daß diese Hohlprofilleiste eine zumindest in Scheibenebene größere Höhe aufweist als das Vollprofil. Eine derartige Ausbildung der Hohlprofilleiste ist insbesondere dann unproblematisch. wenn diese die Unterseite des Abstandhalterrahmens bildet, der beim Einsatz solcher Isolierglasscheiben bei Kraftfahrzeugen ohnehin von der Karosserie verdeckt wird.

Die Erfindung ist in Ausführungsbeispielen auf der Zeichnung dargestellt und wird nachfolgend näher erläutert. Es zeigen:

Fig. 1      den erfindungsgemäßen Abstandhalterrahmen in einer Ansicht,

Fig. 2      den von gekrümmten Glasscheiben beiderseits übergriffenen Abstandhalterrahmen in einem Schnitt gemäß der Linie II-II von Fig. 1,

Fig. 3      den aus Fig. 2 ersichtlichen Abstandhalterrahmen an seiner Verbindungsstelle zwischen dem Vollprofil und der Hohlprofilleiste,

Fig. 4      ein weiteres Ausführungsbeispiel einer analog Fig. 2 dargestellten Isolierglasscheibe, bei welcher der Abstandhalterrahmen abweichend von einem Viereckquerschnitt einen Rundquerschnitt aufweist,

Fig. 5 die Verbindungsstelle des aus Fig. 4 ersichtlichen Abstandhalterrahmens in einem Schnitt analog der Schnittlinie III-III von Fig. 1.

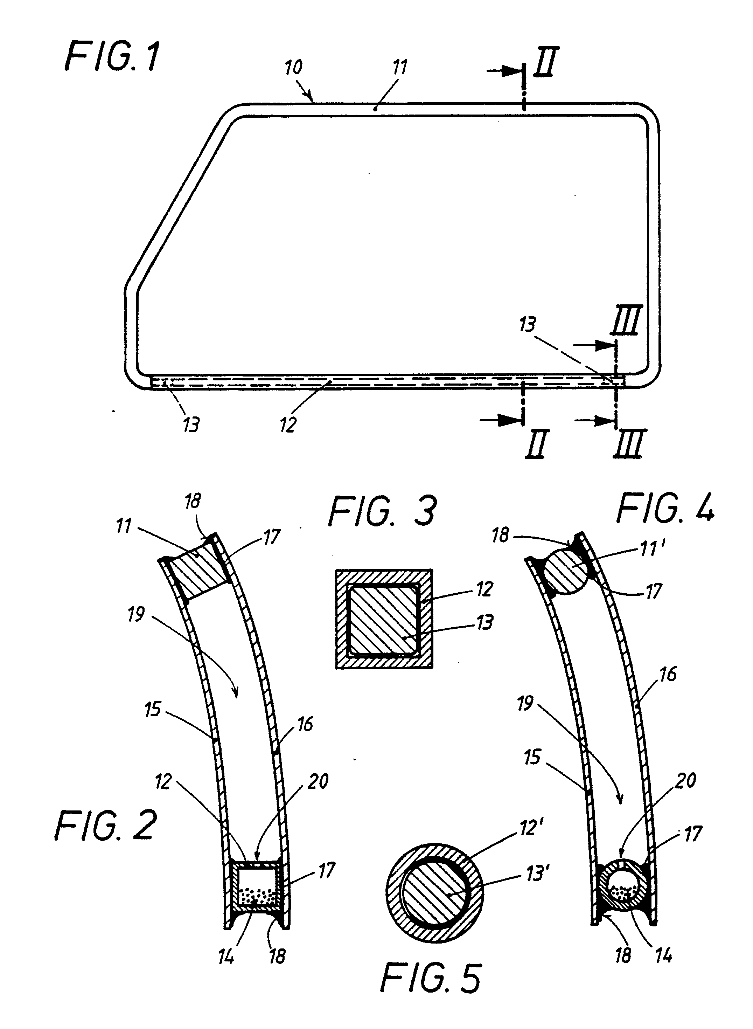

Der aus Fig. 1 ersichtliche Abstandhalterrahmen 10 ist zur Bildung einer Zweischeibenisolierglasscheibe vorgesehen und besteht aus einem Vollprofil 11, welches sich einstückig über drei Rahmenseiten erstreckt und auf einer Rahmenseite mit einer Hohlprofilleiste 12 verbunden ist. Diese Verbindung zwischen dem Vollprofil 11 und der Hohlprofilleiste 12 kann über am Vollprofil angeformte Zapfen 13 erfolgen, die schließend in den Hohlraum des Hohlprofiles 12 passen. Dabei können die Zapfen 13 mit der Hohlprofilleiste 12 durch Verkleben, Verstiften od.dgl. verbunden sein.

Der Abstandhalterrahmen 10 weist im Verlauf seiner aufragenden Seiten eine aus den Fig. 2 und 4 ersichtliche Wölbung auf und ist von zwei in vertikaler Richtung gewölbten Glasscheiben 15 und 16 übergriffen, wodurch zwischen den Glasscheiben ein isolierender Luftzwischenraum 19 gebildet wird. Dabei sind die Glasscheiben in bekannter Weise über Klebe- und Dichtmittel 17, 18 mit dem Abstandhalterrahmen verbunden. Zum Luftzwischenraum 19 hin ist die Hohlprofilleiste 12 mit in Längsrichtung durchlaufenden oder in Abstand hintereinanderliegenden Öffnungen 20 versehen, so daß ein Luftaustausch vom Luftzwischenraum 19 zum Innenraum der Hohlprofilleiste 12 möglich ist, wobei sich im Hohlraum der Hohlprofilleiste 12 ein Trockenmittel 14 befindet, um die Feuchtigkeit im Luftzwischenraum 19 zu binden und ein Beschlagen der Glasscheiben 15 und 16 von ihrer Innenseite her zu verhindern.

Bei dem aus den Fig. 2 und 3 ersichtlichen Ausführungsbeispiel weist das Vollprofil 11 einen quadratischen Querschnitt auf, während die Hohlprofilleiste 12 als quadratisches Rohr ausgebildet ist.

Aus den Fig. 4 und 5 ist jedoch ersichtlich, daß der Abstandhalterrahmen 10 auch einen Rundquerschnitt aufweisen kann. Demgemäß besteht das Vollprofil 11' der Ausführungsform nach Fig. 4 aus einem Rundstab, während das Hohlprofil 12' als Rohr mit rundem Querschnitt ausgebildet ist.

Wie bereits erwähnt, geben die dargestellten und vorbeschriebenen Ausführungen die Erfindung lediglich beispielsweise wieder, die keinesfalls allein darauf beschränkt ist. Es sind vielmehr noch weitere und mancherlei andere Ausgestaltungen der Erfindung denkbar. So ist die Querschnittsform des Vollprofiles und auch des Rohres nicht an die vorbeschriebenen und dargestellten Ausführungen gebunden, sondern kann unterschiedlich davon gestaltet sein.

Bezugszeichenliste:

| 10 | Abstandhalterrahmen |
| 11 | Vollprofil |
| 11' | Vollprofil |
| 12 | Hohlprofilleiste |
| 12' | Hohlprofilleiste |
| 13 | Zapfen |
| 14 | Trockenmittel |
| 15 | Glasscheibe |
| 16 | Glasscheibe |
| 17 | Klebemittel |
| 18 | Dichtmittel |
| 19 | Luftzwischenraum |
| 20 | Öffnung |

**Patentansprüche**

1. Abstandhalterrahmen für Mehrscheibenisolierglas, dessen die Scheiben (15,16) auf Abstand haltende Profilleisten (11,12) einen Durchtrittsöffnungen (20) zum Glaszwischenraum (19) aufweisenden Hohlraum zur Aufnahme eines Trockenmittels (14) aufweisen,

**dadurch gekennzeichnet,**

daß der Abstandhalterrahmen (10) nur an seiner Unterseite eine das Trockenmittel (14) aufnehmende Hohlprofilleiste (12) aufweist, mit der ein die anderen Rahmenseiten bildendes Vollprofil (11) verbunden ist.

2. Abstandhalterrahmen nach Anspruch 1, dadurch gekennzeichnet, daß die Hohlprofilleiste (12) auf Zapfen (13) des Vollprofiles (11) aufgesteckt ist.

3. Abstandhalterrahmen nach Anspruch 1 und/oder 2, dadurch gekennzeichnet, daß der Querschnitt des Vollprofiles (11) in seiner Umrißlinie mit der Außenkontur des Querschnitts der Hohlprofilleiste (12) übereinstimmt.

4. Abstandhalterrahmen nach Anspruch 1 oder 2, dadurch gekennzeichnet, daß die Hohlprofilleiste (12) eine zumindest in Scheibenebene größere Höhe aufweist als das Vollprofil (11).

**Claims**

1. A spacer frame for multi-pane double glazing, in which frame bars (11, 12) for holding the panes (15, 16) at a spacing have a cavity for accommodating a drying agent (14), said cavity having through openings (20) to the intermediate space (19) between the panes, characterised in that the spacer frame is only provided at its underside with a hollow frame bar (12) which accommodates the drying agent (14) and to which a solid member (11) forming the other sides of the frame is connected.

2. A spacer frame according to claim 1 characterised in that the hollow frame bar (12) is fitted on to projections (13) on the solid frame member (11).

3. A spacer frame according to claim 1 and/or claim 2 characterised in that the cross-section of the solid frame member (11) is identical in its outline with the outside contour of the cross-section of the hollow frame bar (12).

4. A spacer frame according to claim 1 or claim 2 characterised in that the hollow frame bar (12) is of a height which is greater at least in the plane of the panes than the solid frame member (11).

**Revendications**

1. Cadre d'espacement pour multivitrage isolant, dont les profilés (11, 12) qui maintiennent les vitres (15, 16) espacées présentent une cavité destinée à recevoir un moyen de séchage (14), cette cavité présentant des ouvertures (20) vers l'espace intervitres (19), caractérisé en ce que le cadre d'espacement (10) ne présente que sur son côté inférieur une baguette de profilé creux (12) destinée à recevoir le moyen de séchage (14), et à laquelle est relié un profilé plein (11) constituant les autres côtés du cadre.

2. Cadre d'espacement selon la revendication 1, caractérisé en ce que la baguette de profilé creux (12) est emboîtée sur des tenons (13) du profilé plein (11).

3. Cadre d'espacement selon la revendication 1 et/ou 2, caractérisé en ce que le contour de la section transversale du profilé plein (11) correspond au contour extérieur de la section transversale de la baguette de profilé creux (12).

4. Cadre d'espacement selon la revendication 1 ou 2, caractérisé en ce que la baguette de profilé creux (12) présente, au moins dans le plan des vitres, une plus grande hauteur que le profilé plein (11).

FIG.1

FIG. 3

FIG. 4

FIG. 2

FIG.5